# EUROPÄISCHE PATENTSCHRIFT

(11) **EP 2 423 052 B1**
(45) Veröffentlichungstag und Bekanntmachung des Hinweises auf die Patenterteilung: **28.01.2015**
(21) Anmeldenummer: 10174255.9
(22) Anmeldetag: 27.08.2010
(51) Int. Cl.: B60R 21/0134

(54) **Vorrichtung und Verfahren zur Erkennung von Personen**
Method and device for detecting people
Dispositif et procédé destinés à la reconnaissance de personnes

(30) Priorität: 25.08.2010 EP 10174010
(43) Veröffentlichungstag der Anmeldung: 29.02.2012
(73) Patentinhaber: Frankfurt University of Applied Sciences, 60318 Frankfurt am Main (DE)
(72) Erfinder: Nauth, Peter, 64665, Alsbach (DE); Pech, Andreas, 61479, Glashütten (DE)
(74) Vertreter: Stumpf, Peter

(56) Entgegenhaltungen:
- WO-A1-2005/096011
- DE-A1- 10 335 601
- JP-A- S61 243 384
- JP-A- 2006 250 927
- US-A1- 2005 131 646

## Beschreibung

Die vorliegende Erfindung betrifft ein Verfahren zur Erkennung von Fußgängern gemäß dem Obergriff des Anspruchs 1. Dies wird zur Reduktion von Personenschäden in Fahrzeugen eingesetzt. Sobald Personen oder Radfahrer erkannt werden, ist es möglich spezielle Maßnahmen im Vorfeld zu treffen, damit der Personenschaden auf ein Minimum reduziert wird.

### [Stand der Technik]

Zur Erkennung von Personenschäden gibt es bereits einige Entwicklungen. Die meisten Entwicklungen beschäftigen sich damit, aus dem Aufprallmuster entsprechende Maßnahmen abzuleiten. Das hat den Nachteil, dass eine Schädigung der Person auftritt. Weiterhin müssen entsprechende Maßnahmen sehr schnell (im Mikrosekundenbereich) durchgeführt werden, was auch hier zu einer zusätzlichen Schädigung der Person führen kann.

Die JP2006250927A offenbart ein Verfahren zur Erkennung von Fußgängern, umfassend die folgenden Schritte:
- Senden von mechanischen Wellen,
- Empfangen von von einem Objekt reflektierten Wellen mit aufmodulierten Informationen über die Oberflächenstruktur des Objekts in Form von Reflexionssignalen;
- Auf bereiten der empfangenen Signale durch Konvertierung der analogen Reflexionssignale in digitale Reflexionssignale; und
- Auslösen eines Signals oder Weiterleitung eines Signals an eine andere Baugruppe.

In der DE602006001012T2 wird ein System beschrieben, bei dem durch eine Auswertung von zwei visuellen Bildern (Stereokamera) eine Person erkannt werden kann. Die Auswertung von zwei visuellen Bildern hat den Nachteil, dass das Bild bei Regen durch Tropfen unkenntlich ist. Weiterhin ist die visuelle Erkennung von Personen bei Nacht sehr schwierig. Ein ähnliches Verfahren ist aus der US 2005/131646A1 bekannt. Auch hier werden optische Sensoren, bestehend aus Stereokameras eingesetzt, die ebenfalls die obengenannten Nachteile aufweisen.

Eine Unterscheidung von beweglichen Personen und beweglichen Gegenständen ist ebenfalls ein Problem. So ist in der DE 10 2009 038 929 ein System beschrieben, das mittels Radar und Kamera durch die zeitliche Erfassung der Abstände zu Objekten die Geschwindigkeiten oder die Größen der Objekte zu ermitteln. Man hat aber auch hier den Nachteil, dass eine genaue Differenzierung zwischen Person und Gegenstand nicht ohne weiteres möglich ist. Objekte können sich überschneiden und dadurch ungewöhnliche Grössen oder Bewegungen ergeben. Weiterhin können Gegenstände die Abmessungen von Personen haben, so dass eine Differenzierung nicht vorgenommen werden kann Aus der WO 2005/096011 ist ebenfalls bekannt Radarsensoren einzusetzen, um Objektdaten bezüglich der Geschwindigkeit und der Entfernung zu ermitteln. Bei diesem Verfahren erfolgt die anschließende Datenauswertung durch eine Auswerteinrichtung aber lediglich dahingehend, ob ein Aufprall unvermeidbar ist oder nicht.

### [Aufgabe]

Aufgabe der vorliegenden Erfindung ist es die Nachteile des Standes der Technik zu beseitigen.

### [Lösung der Aufgabe]

Diese Aufgabe wird erfindungsgemäß gelöst durch ein Verfahren zur Erkennung von Fußgängern, welches folgende Schritte umfasst. In einem ersten Schritt erfolgt das Senden einer mechanischen Welle. Anschließend werden die von einem Objekt reflektierten Wellen in Form von Refelxionssignalen empfangen und durch Konvertierung der analogen Refelxionssignale in digitale Refelxionssignale aufbereitet. In einem weiteren Schritt erfolgen die Analyse der digitalen Reflexionssignale und das Erstellen eines Signalmusters. Anschließend wird das erhaltene Signalmuster mit dem einem gespeicherten Referenzmuster verglichen und die Ähnlichkeiten zwischen dem Signalmuster und den gespeicherten Referenzmustern ermittelt. Anschließend erfolgt das Auslösen eines Signals oder die Weiterleitung des Signals an eine andere Baugruppe.

Die Entwicklung nutzt dabei aus, dass den reflektierten Wellen Informationen über die Oberflächenstruktur des Reflektionskörpers aufmoduliert sind. Das hat den Vorteil, dass der Abgleich anhand der Form des Signalmusters erfolgen kann, nicht nach dessen absoluter Lage. Dadurch sind Signalverschiebungen (Dopplereffekt), die durch die Bewegung eines Objektes entstehen, für die Erkennung nicht relevant. Weiterhin kann auch bei überschneidenden Objekten eine Person erkannt werden.

Als Wellen werden besonders Ultraschall (16 kHz bis 1,6 GHz, bevorzugt 40 und 100 kHz) oder Radiowellen (1 kHz bis 100 THz) bevorzugt.

Die gespeicherten Referenzdaten liegen in einer Form vor, so dass diese direkt mit den Signalen der reflektierten Wellen oder mit den transformierten Signalen der reflektierten Wellen verglichen werden können.

Die Referenzdaten wurden durch Experimente oder durch Simulationen ermittelt und liegen als gespeicherte Daten vor.

In einer vorteilhaften Weiterbildung des Verfahrens lässt sich die Erkennungsgenauigkeit steigern, indem vor dem Senden der mechanischen Wellen die äusseren Umgebungsbedingungen erfasst werden. Dazu werden die Umgebungstemperatur und die Geschwindigkeit des Fahrzeuges erfasst. Es ist zudem vorteilhaft wenn anschließend aufgrund der Umgebungsbedingungen eine vorteilhafte Sendefrequenz, deren Bandbreite, die Pulssequenz und die Wiederholungszyklen für die Pulssequenz auswählbar sind.

Daraufhin wird ein entsprechendes Signal gesendet.

Das von einem oder mehreren Objekten reflektierte Signal wird empfangen.

Eine Weiterbildung der Erfindung sieht vor, dass in der Signalaufbereitung gemäß Schritt c) eine Konvertierung von den analogen Reflektionssignalen in digitale Reflektionssignale in einem entsprechenden Analog-DigitalWandler (DAC) vorgenommen wird.

In einer Ausführung werden in der Signalaufbereitung störende Frequenzen durch einen Frequenzfilter aus dem Reflektionssignal ausgefiltert. Der Filter ist beim analogen oder beim digitalen Reflektionssignal anwendbar.

Als weiteren Schritt erfolgt die Signalanalyse als Teil der Mustererkennung. Gemäß einer Ausgestaltung der Erfindung wird das digitale Reflektionssignal dabei beispielsweise durch eine Transformation in Frequenzen umgewandelt. Die Transformation umfasst dabei eine Fast-Fourier-Transformation, Wavelet-Transformation, Digitale Sinus- oder Kosinustransformation oder eine andere für diesen Zweck geeignete Transformation.

In einer weiteren Ausführungsform sind aus dem digitalen Reflektionssignal weitere Parameter für eine Mustererkennung ermittelbar. So sind beispielsweise, aber nicht darauf beschränkt, der Klirrfaktor, die Mittenfrequenz, die Bandbreite, die Kurtosis (=auf die vierte Potenz ihrer Standardabweichung normiertes viertes Moment der als Zufallsvariable aufgefassten Werte der Fouriertransformierten), die Anstiegszeit vom Beginn des rückgestreuten Signals bis zum Amplitudenmaximum, aus Korrelationsanalysen gewonnene Parameter, durch Faltung mit vorgegebenen Funktionen gewonnene Parameter (Transformationen, z.B. Wavelet-Transformation, Kosinustransformation) einzeln oder in Kombination bestimmbar.

Weiterhin sind ebenfalls der Abstand zum reflektierenden Objekt und die Grösse des reflektierenden Objektes ermittelbar, sodass
mit den ermittelten Parametern aus der Signalanalyse anschliessend ein Mustervergleich möglich ist. Beispielsweise werden beide Werte für einen schnelleren Signaldatenvergleich mit den Referenzdaten zusätzlich berücksichtigt.

Hierbei werden die ermittelten Parameter mit gespeicherten Daten verglichen.

Die gespeicherten Daten wurden als Referenzmuster durch Experimente oder durch Berechnungen ermittelt. Wenn die Umgebungsbedingungen erfasst werden, werden als Referenzdaten solche Daten ausgewählt, die eine kleinere Abweichung zu den Umgebungsbedingungen aufweisen.

Eine eindeutige Zuordnung wird in den seltensten Fällen möglich sein. Daher werden die Parameter in einer Ausführungsform der Erfindung darauf geprüft, wie ähnlich diese mit den Referenzmustern sind. Dies ist durch eine Fuzzy-Logik, künstliche neuronale Netze, statistische Klassifikatoren (z.B. Polynomklassifikatoren), durch einzelne Schwellwerte oder durch statistische Werte wie z.B. Standardabweichung einzeln oder in Kombination möglich. Diese werden als Diskriminanzfunktion bezeichnet.

Bevorzugt wird eine Wahrscheinlichkeit der Übereinstimmung der Parameter mit den entsprechenden Referenzmustern angegeben.

Damit wird die Mustererkennung abgeschlossen. Die ermittelten Daten können ein direktes Signal auslösen oder die ermittelten Daten an andere Baugruppen weitergeben. Damit ist es möglich, bei einer Erkennung eines lebenden Objektes (Person oder Tier) schadensreduzierende Massnahmen zu treffen. Die Anwendung ist aber nicht nur auf die Schadensreduktion beschränkt. Auch bei visuell eingeschränkten Bedingungen z.B. Regen oder bei Nacht sind Personen oder Objekte erkennbar und können dem Fahrer sichtbar gemacht werden (z.B. Einblendung in Display öder Frontscheibe, akustisches Signal oder Vibrationssignal).

### [Ausführungsbeispiele]

Nach Ermittlung der Umgebungsbedingungen 200 wird eine Sendefrequenz von 41 kHz, Bandbreite von 2 kHz eine alternierende Pulssequenz ausgewählt 201. Anschliessend wird ein Ultraschallsignal gesendet 202 und trifft auf einen Fussgänger. Das Reflektionssignal wird empfangen 203 und in der Signalaufbereitung 204 mittels analog Filter und DAC in ein digitales Reflektionssignal umgewandelt. Anschliessend erfolgt die Signalanalyse 205. Dabei werden die Parameter Mittenfrequenz M, Klirrfaktor K, Kurtosis O und Anstiegszeit A ermittelt und wurden zu M = 40,5 kHz; K=8,2 10-3, O = 12,5, A=2,4 [micro]s bestimmt.

Diese Parameter werden mit vorher gespeicherten Daten verglichen 208. Nach der Ähnlichkeitsanalyse wurde eine Wahrscheinlichkeit für einen Fussgänger zu 0,8 und für ein Fahrzeug zu 0,1 bestimmt.

In diesem Fall wird ein Signal für ein lebendes Objekt erzeugt. Dieses Signal wird an korrespondierenden Baugruppen gesendet, so dass entsprechende Massnahmen zur Schadensreduktion bei Personen getroffen werden können.

Bei der Signalanalyse 205 wurde ebenfalls der Abstand 206 und die Breite 207 des Objekts (hier Fussgänger) bestimmt.

### [Abbildungslegenden und Bezugszeichenliste]

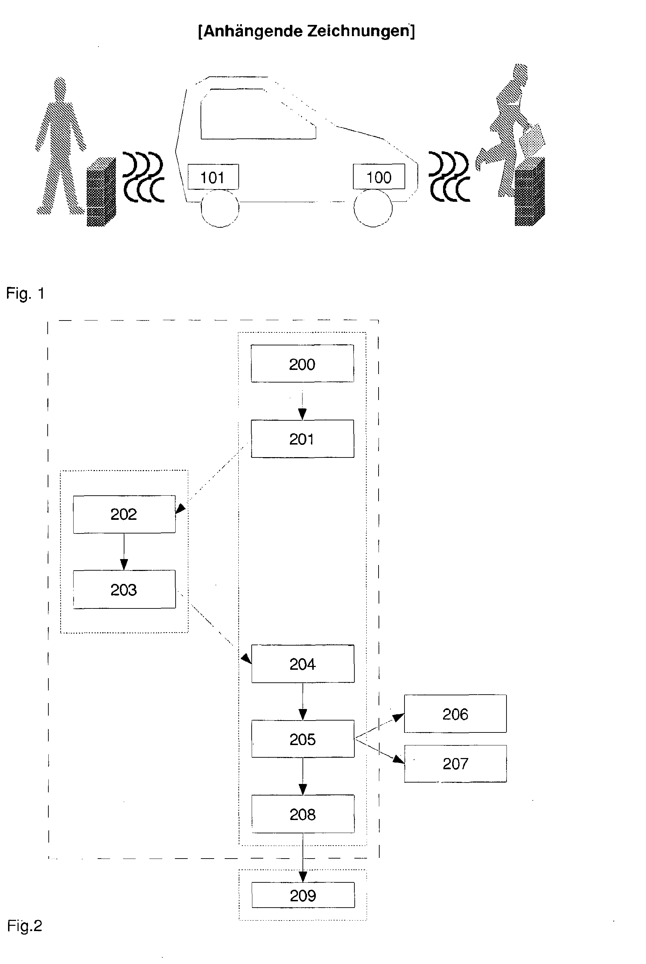

Fig. 1 Anwendung des erfindungsgemäßen Verfahrens durch eine Baugruppe bei einem Fahrzeug, wobei die Baugruppe hinten und vorn sowie seitlich angebracht werden kann

Fig. 2 Schema eines strukturellen Aufbaus einer Baugruppen zur Durchführung des erfindungsgemäßen Verfahrens.
100 vordere Baugruppe zur Differenzierung von Objekten
101 hintere Baugruppe zur Differenzierung von Objekten
200 Erfassung von Umgebungsbedingungen
201 Auswahl einer passenden Sendesequenz und Sendefrequenz
202 Senden der Signale
203 Empfangen der reflektierten Signale
204 Signalaufbereitung und -konvertierung
205 Signalanalyse
206 Auskopplungsmöglichkeit für den Abstand zum Objekt
207 Auskopplungsmöglichkeit für Grössenangaben zu einem Objekt
208 Vergleich mit Referenzdaten, wobei eine Ähnlichkeitsbetrachtung durchgeführt wird
209 Externe Verarbeitung des gelieferten Signals, ob ein lebendes oder nicht lebendes Objekt vorliegt

## Patentansprüche

1. Verfahren zur Erkennung von Fußgängern, umfassend die folgenden Schritte:
a) Senden von mechanischen Wellen;
b) Empfangen von von einem Objekt reflektierten Wellen mit aufmodulierten Informationen über die Oberflächenstruktur des Objekts in Form von Reflexionssignalen;
c) Aufbereiten der empfangenen Signale durch Konvertierung der analogen Reflexionssignale in digitale Reflexionssignale;
d) Analyse der digitalen Reflexionssignale hinsichtlich der aufmodulierten Informationen über die Oberflächenstruktur des Objekts, und Erstellen eines Signalmusters;
e) Vergleich des Signalmusters mit gespeicherten Referenzmustern;
f) Ermitteln von Ähnlichkeiten zwischen dem Signalmuster und den gespeicherten Referenzmustern;
g) Auslösen eines Signals oder Weiterleitung eines Signals an eine andere Baugruppe.

2. Verfahren nach Anspruch 1, **dadurch gekennzeichnet, dass** vor dem Senden der mechanischen Welle gemäß Schritt a), die äußeren Umgebungsbedingungen erfasst werden und dass anschließend eine Sendefrequenz, deren Bandbreite, die Pulssequenz und die Wiederholungszyklen für die Pulssequenz ausgewählt werden;

3. Verfahren nach Anspruch 1 oder 2, **dadurch gekennzeichnet, dass** die Aufbereitung der empfangenen Wellensignale gemäß Schritt c) in einem Analog-Digital-Wandler vorgenommen wird.

4. Verfahren nach einem der Ansprüche 1 bis 3, **dadurch gekennzeichnet, dass** vor oder nach Schritt c) störende Frequenzen durch einen Frequenzfilter aus dem Reflexionssignal ausgefiltert werden.

5. Verfahren nach einem der Ansprüche 1 bis 4, **dadurch gekennzeichnet, dass** die Analyse der digitalen Reflexionssignale gemäß Schritt d) durch Transformation erfolgt.

6. Verfahren nach Anspruch 5, **dadurch gekennzeichnet, dass** die Transformation eine Fast-Fourier-Transformation, eine Wavelet-Transformation, eine Digitale Sinus- oder Kosinustransformation oder eine andere für diesen Zweck geeignete Transformation umfasst.

7. Verfahren nach einem der Ansprüche 1 bis 6, **dadurch gekennzeichnet, dass** aus dem digitalen Reflexionssignal weitere Parameter für die Mustererkennung ermittelt werden.

8. Verfahren nach einem der Ansprüche 1 bis 7, **dadurch gekennzeichnet, dass** der Abstand zum Objekt und die Größe des Objekts ermittelt werden, wobei beide Werte für den Vergleich des Signalmusters mit den gespeicherten Referenzmustern zusätzlich herangezogen werden.

9. Verfahren nach einem der Ansprüche 1 bis 8, **dadurch gekennzeichnet, dass** die Referenzmuster durch Experimente oder durch Simulation erstellt werden.

10. Verfahren nach einem der Ansprüche 1 bis 9, **dadurch gekennzeichnet, dass** die Ermittlung von Ähnlichkeiten zwischen dem Signalmuster und den gespeicherten Referenzmustern gemäß Schritt f) durch Fuzzy-Logik, künstliche neuronale Netze, statistische Klassifikatoren, durch einzelne Schwellwerte oder durch statistische Werte einzeln oder in Kombination erfolgt.

11. Verfahren nach einem der Ansprüche 1 bis 10, **dadurch gekennzeichnet, dass** als Ergebnis der Ermittlung von Ähnlichkeiten zwischen dem Signalmuster und den gespeicherten Referenzmustern gemäß Schritt f) eine Wahrscheinlichkeit der Übereinstimmung der Parameter mit den entsprechenden Referenzmustern angegeben wird.

12. Verfahren nach einem der Ansprüche 1 bis 11, **dadurch gekennzeichnet, dass** bei der Ähnlichkeitsbewertung ein Abgleich zwischen dem Signalmuster und den gespeicherten Referenzmustern anhand der Form des Signalmusters unabhängig von dessen absoluter Lage erfolgt.

13. Verfahren nach einem der Ansprüche 1 bis 12, **dadurch gekennzeichnet, dass** beim Aufbereiten der empfangenen Signale gemäß Schritt c) wenigstens einer der Parameter Mittenfrequenz, Kurtosis, Korrelationsanalyse oder Faltung mit vorgegebenen Funktionen bestimmt wird, und der Mustervergleich gemäß Schritt e) mit dem Signalmuster der bestimmten Parameter durchgeführt wird.

14. Verfahren nach Anspruch 13, **dadurch gekennzeichnet, dass** bei der Analyse gemäß Schritt d) das Signalmuster basierend auf dem Parameter oder den Parametern erstellt wird.

## Claims

1. Method for detecting pedestrians, comprising the following steps:
a) transmitting mechanical waves;
b) receiving waves reflected from an object with modulated information as to the surface structure of the object in the form of reflection signals;
c) conditioning the signals received by converting the analogue reflection signals into digital reflection signals;
d) analysing the digital reflection signals in respect of the modulated information as to the surface structure of the object, and developing a signal pattern;
e) comparing the signal pattern with stored reference patterns;
f) detecting similarities between the signal pattern and the stored reference patterns;
g) emitting a signal or transmitting a signal onwards to another assembly.

2. Method according to claim 1, **characterised in that**, before the transmission of the mechanical wave according to step a), the external environmental conditions are determined and then a transmission frequency, its bandwidth, the pulse sequence and the repeat cycles for the pulse sequence are chosen.

3. Method according to claim 1 or 2, **characterised in that** the conditioning of the wave signals received according to step c) is carried out in an analogue-to-digital converter.

4. Method according to one of claims 1 to 3, **characterised in that**, before or after step c), interference frequencies are filtered out of the reflection signal by a frequency filter.

5. Method according to one of claims 1 to 4, **characterised in that** the analysis of the digital reflection signals according to step d) is carried out using a transform.

6. Method according to claim 5, **characterised in that** the transform is a fast Fourier transform, a wavelet transform, a digital sine or cosine transform or another transform suitable for this purpose.

7. Method according to one of claims 1 to 6, **characterised in that** further parameters for the pattern recognition are determined from the digital reflection signal.

8. Method according to one of claims 1 to 7, **characterised in that** the distance to the object and the size of the object are determined, both values additionally being used for the comparison of the signal pattern with the stored reference patterns.

9. Method according to one of claims 1 to 8, **characterised in that** the reference patterns are developed by experiments or by simulation.

10. Method according to one of claims 1 to 9, **characterised in that** the detection of similarities between the signal pattern and the stored reference patterns according to step f) is carried out by fuzzy logic, artificial neural networks, statistical classifiers, individual threshold values or statistical values, individually or combined with one another.

11. Method according to one of claims 1 to 10, **characterised in that**, as the result of the detection of similarities between the signal pattern and the stored reference patterns according to step f), an indication of the probability of the parameters coinciding with the corresponding reference patterns is provided.

12. Method according to one of claims 1 to 11, **characterised in that**, in the evaluation of similarity, a comparison is made between the signal pattern and the stored reference patterns using the form of the signal pattern irrespective of its absolute position.

13. Method according to one of claims 1 to 12, **characterised in that**, in the conditioning of the received signals according to step c), at least one of the parameters of centre frequency, kurtosis, correlation analysis or convolution with predefined functions is determined, and the pattern comparison according to step e) is carried out with the signal pattern of the parameters determined.

14. Method according to claim 13, **characterised in that** during the analysis according to step d) the signal pattern is developed on the basis of the parameter or parameters.

## Revendications

1. Procédé de reconnaissance de piétons, comprenant les étapes suivantes :
a) envoi d'ondes mécaniques ;
b) réception d'ondes réfléchies par un objet avec des informations modulées sur la structure de surface de l'objet sous la forme de signaux de réflexion ;
(c) exploitation des signaux reçus par conversion des signaux de réflexion analogiques en signaux de réflexion numériques ;
(d) analyse des signaux de réflexion numériques concernant les informations modulées sur la structure de surface de l'objet et génération d'un échantillon de signal ;
(e) comparaison de l'échantillon de signal avec les échantillons de référence mémorisés ;
(f) détermination de similitudes entre l'échantillon de signal et les échantillons de référence mémorisés ; et
(g) déclenchement d'un signal ou transmission d'un signal à un autre bloc.

2. Procédé selon la revendication 1, **caractérisé en ce que**, avant l'envoi de l'onde mécanique selon l'étape a), les conditions environnementales externes sont saisies et, ensuite, une fréquence d'envoi, sa largeur de bande, la séquence d'impulsions et les cycles de reprise pour la séquence d'impulsions sont sélectionnés.

3. Procédé selon la revendication 1 ou la revendication 2, **caractérisé en ce que** l'exploitation des signaux d'ondes reçus selon l'étape c) est effectuée dans un convertisseur analogique-numérique.

4. Procédé selon l'une quelconque des revendications 1 à 3, **caractérisé en ce que**, avant ou après l'étape c), les fréquences parasites sont exfiltrées du signal de réflexion par un filtre de fréquences.

5. Procédé selon l'une quelconque des revendications 1 à 4, **caractérisé en ce que** l'analyse des signaux de réflexion numériques selon l'étape d) se fait par transformation.

6. Procédé selon la revendication 5, **caractérisé en ce que** la transformation comprend une transformation rapide de Fourier, une transformation en ondelettes, une transformation sinusoïdale ou cosinusoïdale numérique ou une autre transformation convenant dans ce but.

7. Procédé selon l'une quelconque des revendications 1 à 6, **caractérisé en ce que** d'autres paramètres pour la reconnaissance d'un échantillon sont déterminés à partir du signal de réflexion numérique.

8. Procédé selon l'une quelconque des revendications 1 à 7, **caractérisé en ce que** la distance à l'objet et la grandeur de l'objet sont déterminées, les deux valeurs étant également mises à contribution pour la comparaison de l'échantillon de signal avec les échantillons de référence mémorisés.

9. Procédé selon l'une quelconque des revendications 1 à 8, **caractérisé en ce que** les échantillons de référence sont établis par des essais ou par simulation.

10. Procédé selon l'une quelconque des revendications 1 à 9, **caractérisé en ce que** la détermination de similitudes entre l'échantillon de signal et les échantillons de référence mémorisés selon l'étape f) se fait par logique floue, des réseaux de neurones artificiels, des classificateurs statistiques, par des valeurs de seuil individuelles ou par des valeurs statistiques individuellement ou en combinaison.

11. Procédé selon l'une quelconque des revendications 1 à 10, **caractérisé en ce que**, comme résultat de la détermination de similitudes entre l'échantillon de signal et les échantillons de référence mémorisés selon l'étape f), on indique une probabilité de la coïncidence des paramètres avec les échantillons de référence correspondants.

12. Procédé selon l'une quelconque des revendications 1 à 11, **caractérisé en ce que**, lors de l'évaluation de similitudes, il se fait un équilibrage entre l'échantillon de signal et les échantillons de référence mémorisés au moyen de la forme de l'échantillon de signal indépendamment de sa position absolue.

13. Procédé selon l'une quelconque des revendications 1 à 12, **caractérisé en ce que**, lors de l'exploitation des signaux reçus selon l'étape c), au moins l'un des paramètres, à savoir la fréquence moyenne, la curtose, l'analyse de corrélation ou la convolution, est déterminé avec des fonctions préétablies et la comparaison d'échantillons selon l'étape e) est réalisée avec l'échantillon de signal des paramètres déterminés.

14. Procédé selon la revendication 13, **caractérisé en ce que**, lors de l'analyse selon l'étape d), l'échantillon de signal est établi sur la base du paramètre ou des paramètres.
